# EUROPÄISCHE PATENTANMELDUNG

(11) **EP 1 394 328 A1**
(43) Veröffentlichungstag der Anmeldung: **03.03.2004**
(21) Anmeldenummer: 03019131.6
(22) Anmeldetag: 23.08.2003
(51) Int. Cl.: E03F 7/04, F16K 15/04

(54) **Rückstauventil für Abflussrohre**

(30) Priorität: 29.08.2002 DE 10239622
(71) Anmelder: Graul, Niklas-Simon, Dipl.-Med., 02708 Lawalde (DE)
(72) Erfinder: Graul, Niklas-Simon, Dipl.-Med., 02708 Lawalde (DE)
(74) Vertreter: Ilberg, Roland W., Dipl.-Ing.

(57) **Zusammenfassung**

Bei einem Rückstauventil für Abflussrohre, wie Abwasserrohre oder Einläufe in rückstaugefährdeten Kellerräumen, mit einer aufschwimmbaren Kugel, die bei normalem Abflussbetrieb in Bereitschaft ruht und bei einem Rückstau gegen eine Dichtfläche zum Absperren des Abflussrohres anschwimmen kann, liegt ein Bypassrohr (3b) zu einem das Abflussrohr (2) fortsetzenden Abflussrohrabschnitt (3a), in welchem Bypassrohr (3b) die Schwimmkugel (4) beweglich gelagert ist, wobei das Bypassrohr (3b) im Normalbetrieb kein Abflusswasser führt, und wobei die Schwimmkugel (3b) in ihrer unteren Endlage (5) den Abfluss (2, 3a) vollständig frei gibt und in ihrer oberen Endlage (6) das Abflussrohr (2) gegen Rückstauwasser sperrt.

## Beschreibung

Die Erfindung betrifft ein Rückstauventil für Abflussrohre, wie Abwasserrohre oder Einläufe in rückstaugefährdeten Kellerräumen, mit einer aufschwimmbaren Kugel, die bei normalem Abflussbetrieb in Bereitschaft ruht und bei einem Rückstau gegen eine Dichtfläche zum Absperren des Abflussrohres anschwimmen kann.

Jeder Einwohner einer mittleren Stadt verbraucht im Mittel ca. 150 l reines Wasser, das den Frischwasserleitungen entnommen wird und meist stark verunreinigt in die Abwasserleitungen zurückfließt. Sand, gröbere schwimmfähige Abfälle, schlammbildende Schwebestoffe, kolloidal gelöste organische Stoffe, gelöste anorganische Salze, Säuren, Laugen, Fett- und Ölreste, Farbstoffe, Bakterien, Haare, Flusen, Hygieneartikel, Rückstände von Reinigungs-, Reparatur- und Verschönerungsarbeiten, Speisen- und Futterreste u.a. machen - ob zulässig oder untersagt - die Verunreinigungen des Wassers aus. Ähnlich belastet ist Regenwasser oder in Einläufe abfließendes Wasser. Das Wasser passiert für gewöhnlich ein Rückstauventil, bevor es über ein oder mehrere Anschlussrohre in einen Abwassersammler einläuft. Bei Grundstücken mit einem hohen Grundwasserstand oder wenn sie in gefährdeten Gebieten liegen, ist ein Rückstauventil Vorschrift.

Das Rückstauventil hat die Aufgabe, in Zeiten starker Regenfälle oder Fluten, über die Entsorgungsleitungen rückstauende Wassermassen abzusperren, das heißt, diese nicht über die Hausinstallation und Einläufe in ein Gebäude zu drücken. Es wird vom rückstauenden Wasser betätigt, beispielsweise über einen Schwimmer. Man kann daran ermessen, dass die Betätigungskräfte nicht allzu groß sind. Der ordnungsgemäßen Funktion von Rückstauventilen kommt jedoch allerhöchste Bedeutung zu, um Schäden in und an Gebäuden zu vermeiden.

Bei herkömmlichen Rückstauventilen tritt nun das Problem auf, dass sie bei unzureichender Wartung nicht mehr dicht schließen, da die vorgenannten Verunreinigungen sich mit der Zeit an den Bauteilen und Konturen der Rückstauventils anlagern und sowohl die Beweglichkeit des Rückstauventils beeinträchtigen als auch verhindern, dass sich das Rückstauventil wirklich spaltdicht schließt.

So ist aus der DE 36 18 546 A1 ein Rückstauventil für vertikal verlaufende Abwasserleitungen in rückstaugefährdeten Kellerräumen mit einer nach dem archimedischen Prinzip aufschwimmbaren Kugel bekannt, die bei normalem Ablaufbetrieb in einen eine Kammer seitlich des Abflusskanals bildenden Reinigungsstutzen rollen und bei einem Rückstau gegen eine Dichtlippe zum Absperren des Abflusskanals anschwimmen kann. Die Schwimmkugel liegt in einem Drahtkorb, in dem sie zwischen dem Reinigungsstutzen und der Dichtlippe verrollen kann. Wird der Reinigungsstutzen nicht regelmäßig gewartet und der Drahtkorb und die Kugel nicht regelmäßig gesäubert, was in der Praxis bei derlei nur ungern verrichteten Arbeiten die Regel sein dürfte, setzten sich Schwemmstoffe bekanntlich sehr schnell und hartnäckig an der partiell im Abflussweg liegenden Schwimmkugel und am Drahtkorb an und verstopfen den Abfluss. Solange die Kugel rollfähig ist, werden nicht nur der Drahtkorb, sondern nach und nach auch alle Bereiche der Kugeloberfläche mit einer wohlbekannten schmierigen, zähen und schwer zu entfernenden Ablagerungsschicht überzogen. Außerdem setzen sich gröbere Partikel, Haare, Flusen usw. im Drahtkorb und oberhalb der Schwimmkugel im Reinigungsstutzen ab. Bei einem Rückstau lagern sich des weiteren im Rückstau transportierte Schwebeteilchen unterhalb und hinter der Schwimmkugel im Reinigungsstutzen ab und bewirken, dass die Schwimmkugel mehr und mehr im Abflusskanal liegt, wodurch sich der Verstopfungseffekt nur noch beschleunigt. Der Drahtkorb hintergreift lösbar die Dichtlippe, um ihn zwecks Reinigung herausnehmen zu können. Dies erfordert eine relativ komplizierte Dichtlippe und ein sorgfältiges Einsetzen und Herausnehmen des Drahtkorbes. Im Falle eines Unwetters dringt dann doch überraschend schnell rückstauendes Wasser in ein Gebäude ein und verursacht mitunter sehr hohe Schäden. In einem solchen Falle kommen dann alle vergessenen Wartungsarbeiten zu spät.

Aus der GB 2 222 230 A ist ein Rückstauventil für beispielsweise auf dem Meeresboden verlegte Pipelines für Öl, Gas oder sonstige Fluids bekannt. Die Pipeline steht im Normalbetrieb unter einem sehr hohen Förderdruck, der bewirkt, dass ein Abdichtkörper an Führungsbahnen oder sonstigen Leiteinrichtungen in einen nach oben orientierten Blindstutzen gedrückt und dort in Bereitschaft gehalten wird. Sinkt der Betriebsdruck, beispielsweise bei einem Leck in der Pipeline, fällt der Abdichtkörper aufgrund der Schwerekraft bahngeführt vor eine Dichtlippe und verhindert den Rückfluss von Gas, Öl oder dergleichen Fluid durch das Leck in das offene Meer. Der Abdichtkörper ist schwerer als das Fördermedium und wird lediglich durch den Förderdruck im Bereitschaftszustand gehalten. Somit arbeitet das Rückstauventil als Druckventil und nicht nach dem Auftriebsprinzip. Das Problem des Zusetzens des Rückstauventils an den Führungsbahnen bzw. Leiteinrichtungen für den Abdichtkörper besteht nicht, da das Fördergut, wie Gas oder Öl, schon zwecks Verminderung der Transportenergie und Rohrverstopfungen, zumindest vorgefiltert in Pipelines transportiert wird. In einer speziellen Ausführung verbindet ein zum Zwecke der Druckherabsetzung dünn gehaltenes Differenzdruckrohr den Blindstutzen mit der Pipeline, um das Abfallen des Abdichtkörpers sicherer zu machen, indem bei einem Rückstau ein Rückstaudruckanteil gegen den Abdichtkörper wirkt und diesen zum sicheren Abfallen veranlasst.

Aufgabe der Erfindung ist es, ein Rückstauventil mit einer schwimmfähigen Kugel für im wesentlichen vertikal ausgerichtete Abflussrohre, insbesondere Abwasserrohre und Einläufe im Kellerbereich zu schaffen, das wartungsarm bis wartungsfrei ist und dennoch stets funktionstüchtig bleibt.

Die Aufgabe wird erfindungsgemäß durch die im Anspruch 1 angegebenen Merkmale gelöst. Vorteilhafte Weiterbildungen geben die abhängigen Ansprüche 2 bis 8 an.

Erfindungsgemäß ist ein Bypassrohr zu einem das Abflussrohr fortsetzenden Abflussrohrabschnitt angeordnet, wobei das Bypassrohr am normalen Abflussbetrieb nicht beteiligt ist, und in welchem Bypassrohr die Schwimmkugel zwischen zwei Endlagen frei beweglich gelagert ist. Die Schwimmkugel sperrt in der einen, oberen Endlage, das Abflussrohr und in der anderen, unteren Endlage, gibt sie den Abfluss frei. Indem die Schwimmkugel im Normalbetrieb nicht im Wege des Abwassers liegt, bleibt sie sauber und leicht beweglich. Auch können sich keine schwebenden Teilchen auf der Schwimmkugelbahn absetzen. Neben der Schwimmkugel sind überhaupt keine weiteren beweglichen Teile, wie Hebel, Scharniere, Klappen, Drahtkörbe usw. vorhanden, was ein weiterer großer funktioneller und auch kostenmäßiger Vorteil der Erfindung ist. Die Schwimmkugel ist außen völlig glatt und in vorteilhafter Weise aus Kunststoff. Beispielsweise ist sie ein Kunststoffhohlkörper oder sie ist aus einem leichten, ggf. innengeschäumten Kunststoffvollmaterial. Nirgendwo kann sich Rost bilden. Da der Durchmesser der Schwimmkugel relativ groß ist, erhält sie einen entsprechend großen Auftrieb sowie bei drückendem Wasser zusätzlich Gegendruck. Nicht zuletzt soll erwähnt werden, dass das Rückstauventil den Abfluss im Querschnitt an keiner Stelle einengt. Das Wasser läuft ungehindert wie durch jeden anderen Abschnitt des Abflussrohres ab.

Aus Sicherheitsgründen hat das Bypassrohr vorteilhaft eine solche Querschnittsform, dass unterhalb der Schwimmkugel Spritzwasser durch das Bypassrohr ablaufen kann, ohne die Schwimmkugel oder die Bahn der Schwimmkugel zu beeinträchtigen. Auch ablaufendes Rückstauwasser findet im Bypassrohr keine Stellen, an denen sich Schwebeteile unliebsam anlagern könnten.

Ein Gehäuse des Rückstauventils lässt sich sehr einfach herstellen, beispielsweise aus Kunststoff, Steingut oder Stahlguss. Auch der Einbau des Rückstauventils in den Abwasserweg bereitet keinerlei Probleme. Die Schwimmkugel wird entweder bei der Herstellung des Rückstauventil eingelegt oder nachträglich durch eine wasserdichte Öffnung eingelegt. Diese Öffnung kann zugleich als Revisionsöffnung für das Abflussrohr oder ein Anschlussrohr genutzt werden.

Anhand eines Ausführungsbeispiels soll die Erfindung näher erläutert werden. In der zugehörigen Figur ist stark schematisch und unmaßstäblich eine Ausführungsform der Erfindung dargestellt.

Mit 1 ist ein Abschnitt eines Hausanschlussrohres bezeichnet, das zu einem nicht näher dargestellten Abwassersammler auf der Straße führt. Es hat normalerweise einen kreisrunden Querschnitt, wie symbolhaft dargestellt. In das Hausanschlussrohr 1 führt von oben ein Abflussrohr 2 mit ebenfalls kreisrundem Querschnitt und einer Nennweite von beispielsweise 80 oder 100 mm. Das Abflussrohr kann für Abwasser, Regenwasser, Einlaufwasser oder die gesamte Hausentwässerung vorgesehen sein. Im weiteren soll für das zu entsorgende Wasser der Begriff Abwasser gebraucht werden. An der Einmündung des Abflussrohres 2 in das Hausanschlussrohr 1 ist ein Rückstauventil 3 angesetzt. Das Gehäuse des Rückstauventils 3 kann, wie auch das Abflussrohr 2 und das Hausanschlussrohr 1, aus Kunststoff sein. Die Einbindung zwischen Abflussrohr 2 und Hausanschlussrohr 1 ist nur schematisch dargestellt und wird fachüblich hergestellt, weswegen Muffen, Abdichtmaterial, Rohrschellen usw. nicht eingezeichnet sind.

Das Gehäuse des Rückstauventils 3 bildet innen zwei Wege aus. Der eine Weg bildet einen Abflussrohrabschnitt 3a in Fortsetzung des Abflussrohres 2. Er hat dieselbe Nennweite wie das Abflussrohr 2 und führt in das Hausanschlussrohr 1. Der Abflussrohrabschnitt 3a kann aber auch geringfügig im Querschnitt größer sein, wenn verhindert werden muss, dass Abwasserspritzer durch das noch zu beschreibende Bypassrohr 3b ablaufen. Dies wäre beispielsweise sinnvoll, wenn das Bypassrohr 3b im Querschnitt kreisförmig ausgeformt wäre.

Durch den Abflussrohrabschnitt 3a läuft in Fortsetzung zum Abflussrohr 2 das Abwasser im Normalfall ungestört ab. Der zweite Weg stellt einen Bypass zum Abflussrohrabschnitt 3a her. Das Bypassrohr 3b führt in einem schrägen Winkel von beispielsweise 45° vom Abflussrohr 2 zum Hausanschlussrohr 1. Der Winkel wird je nach Konstruktion des Rückstauventils 3 in einem größeren Bereich streuen. Das Bypassrohr 3b kann aber auch mut beiden Enden in einen das Abflussrohr 2 fortsetzenden Abflussrohrabschnitt 3a eingebunden sein. Der Nenndurchmesser des Bypassrohres 3b ist größer als der Nenndurchmesser des Abflussrohres 2. Er beträgt beispielsweise 200 bis 250 mm. Sein Querschnitt ist vorzugsweise aus noch zu erläuternden Gründen nicht kreisrund. Der Ausdruck "Rohr" seht dafür, dass eine Schwimmkugel 4 in dem Bypass 3b des Rückstauventils 3 funktionsgerecht zu lagern und zu führen ist. Die glatte Schwimmkugel 4 liegt im Normalfall an einer Engestelle 5 im unteren Ende des Bypassrohres 3b auf. Die Engestelle 5 ist so ausgeformt, dass sich keinerlei Schwemmteile festsetzen können. Staut Wasser in das Hausanschlussrohr 1 zurück und will bis in das Abflussrohr 2 drücken, so wird die Schwimmkugel 4 vom Wasser soweit angehoben, bis sie sich vor die Öffnung des Abflussrohrs 2, genauer gesagt, vor einen Dichtungsring 6 im Gehäuse des Rückstauventils 3, setzt.

Dieser Dichtringbereich 6 im Rückstauventil 3 ist in Anpassung an den Durchmesser der Schwimmkugel 4 ausgeformt und fachüblich ausgestattet. Weil die Schwimmkugel 4 einen größeren Durchmesser als das Abflussrohr 2 bzw. der Durchmesser des Rohrstutzens 3 im Rückstauventil 3 hat, ist das Gehäuse des Rückstauventils 3 an dieser Stelle beispielhaft kalottenförmig ausgebaucht, damit die Schwimmkugel 4 sich wirklich zentrisch an den Dichtring 6 anlegen kann. Die Schwimmkugel 4 verhindert aufgeschwommen das Eindringen von Rückstauwasser in das Abflussrohr 2 und damit zum Beispiel in einen Gebäudekeller.

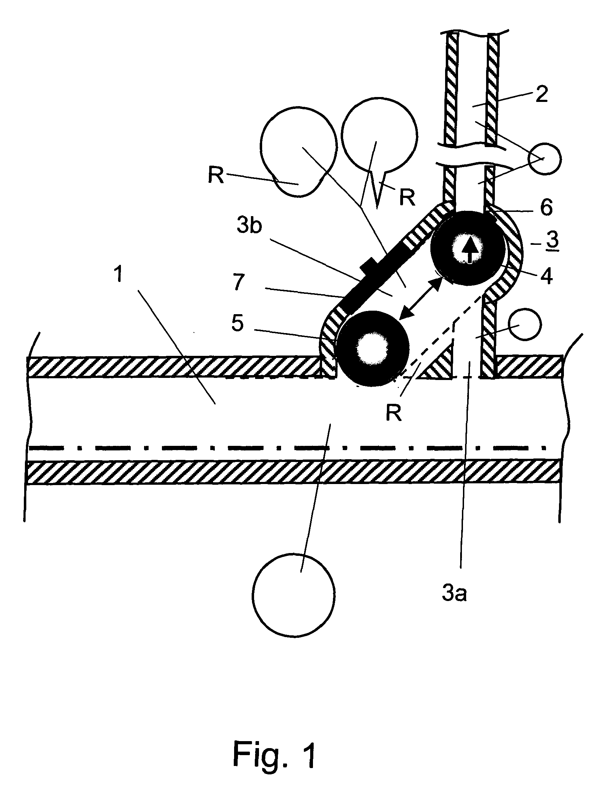

Fällt der Wasserspiegel wieder, so sinkt die Schwimmkugel 4 im Bypassrohr 3b mit dem Wasserspiegel wieder ab, bis sie an der Engestelle 5 im Bypassrohr 3b aufsitzt. Die Engestelle 5 und die Schwimmkugel 4 sind so aufeinander abgestimmt, dass die Schwimmkugel 4 nicht oder nur unwesentlich in den lichten Raum des Hausanschlussrohres 1 eintauchen kann. Andererseits bietet die Engestelle 5 keinerlei Kanten aus. Das abfließende Wasser fließt durch den Abflussrohrabschnitt 3a des Rückstauventils 3 ab. Außerdem ist die Geometrie des Bypassrohres 3b im Beispiel so gestaltet, dass sich im unteren Bereich eine Rinne R ausbildet. Zwei mögliche Formen sind symbolisch in der Figur dargestellt. Hierdurch kann das abfließende Wasser auch ungehindert durch die Rinne R im Bypassrohr 3b ablaufen. Außerdem können durch diese Rinne R im Bypassrohr 3b im Normalbetrieb Abwasserspritzer ablaufen, ohne dass sie die Schwimmkugel 4 oder deren Bahn mit Schmutz befrachten. Für die Schwimmkugel 4 bildet die Geometrie des Bypassrohrs 3b einen kreisförmigen Querschnitt aus. Die Schwimmkugel 4 läuft somit immer oberhalb der Rinne R im Bypassrohr 3b.

Entgegengesetzt zur Rinne R im Bypassrohr 3b verschließt ein Deckel eine Revisionsöffnung 7 im Bypassrohr 3b. Durch diese Revisionsöffnung 7 lässt sich die Schwimmkugel 4 einsetzen. Außerdem kann bei herausgenommener Schwimmkugel 4 das Hausanschlussrohr 1 oder das Abflussrohr 2 mit einer üblichen Spirale oder dergleichen Rohrreinigungsgerät gesäubert werden oder auch das Gehäuse des Rückstauventils 3. Das Rückstauventil 3 ist jedoch normalerweise völlig wartungsfrei, was die Erfindung in besonderem Maße auszeichnet.

Bezugszeichen
- 1: Hausanschlussrohr
- 2: Abflussrohr
- 3: Rückstauventil
- 3a: Abflussrohrabschnitt
- 3b: Bypassrohr
- 4: Schwimmkugel
- 5: Engestelle im Bypassrohr
- 6: Dichtungsring
- 7: Revisionsöffnung mit Deckel

## Patentansprüche

1. Rückstauventil für Abflussrohre, wie Abwasserrohre oder Einläufe in rückstaugefährdeten Kellerräumen, mit einer aufschwimmbaren Kugel, die bei normalem Abflussbetrieb in Bereitschaft ruht und bei einem Rückstau gegen eine Dichtfläche zum Absperren des Abflussrohres anschwimmen kann,
**dadurch gekennzeichnet,**
**dass** zu einem das Abflussrohr (2) fortsetzenden Abflussrohrabschnitt (3a) ein Bypassrohr (3b) liegt, in welchem die Schwimmkugel (4) zwischen ihren Endlagen beweglich lagert, dass das Bypassrohr (3b) im Normalbetrieb kein Abflusswasser führt, und dass die Schwimmkugel (3b) in ihrer unteren Endlage (5) den Abfluss (2, 3a) vollständig frei gibt und in ihrer oberen Endlage (6) das Abflussrohr (2) gegen Rückstauwasser sperrt.

2. Rückstauventil nach Anspruch 1,
**dadurch gekennzeichnet,**
**dass** das Bypassrohr (3b) im wesentliche die Hypotenuse zu einem in ein Anschlussrohr (1) einmündenden Abflussrohrabschnitt (3a) des Abflussrohres (2) und dem Anschlussrohr (1) bildet.

3. Rückstauventil nach Anspruch 1 oder 2,
**dadurch gekennzeichnet,**
**dass** das Bypassrohr (3b) eine größere Weite besitzt als das Abflussrohr (2) und der das Abflussrohr (2) fortsetzende Abflussrohrabschnitt (3a).

4. Rückstauventil nach einem der vorstehenden Ansprüche,
**dadurch gekennzeichnet,**
**dass** das Bypassrohr (3b) einen etwa eiförmigen Querschnitt besitzt, wobei der am stärksten gekrümmte Rohrwandabschnitt nach unten weist und eine Rinne (R) bildet.

5. Rückstauventil nach Anspruch einem der vorstehenden Ansprüche,
**dadurch gekennzeichnet,**
**dass** das Bypassrohr (3b) am unteren Ende eine kantenlose Einengung (5) derart ausbildet, dass die Schwimmkugel (4) in der unteren Endlage abgestützt ist.

6. Rückstauventil nach einem der vorstehenden Ansprüche,
**dadurch gekennzeichnet,**
**dass** der Abflussrohrabschnitt (3a) gegenüber dem Abflussrohr (2) querschnittsvergrößert ist.

7. Rückstauventil nach einem der vorstehenden Ansprüche,
**dadurch gekennzeichnet,**
**dass** das Rückstauventil (3), ausbildend einen Anschlussstutzen zum Anschluss an das Abflussrohr (2), einen Abdichtabschnitt (6), den Abflussrohrabschnitt 3a für die ungehinderte Ableitung des Abwassers durch das Rückstauventil (3) hindurch in ein Anschlussrohr (1), sowie das Bypassrohr (3b) für die Lagerung der Schwimmkugel (4), wobei der Abflussrohrabschnitt (3a) und das Bypassrohr (3b) endseitig für die Einbindung in das Anschlussrohr (1) ausgestaltet sind, in einer kompakten Gehäuseeinheit vereinigt ist.

8. Rückstauventil nach einem der vorstehenden Ansprüche,
**dadurch gekennzeichnet,**
**dass** eine verschließbare Revisionsöffnung (7) im Bypassrohr (3b) Zugang zur Abwasserinstallation bietet.
